# EUROPÄISCHE PATENTSCHRIFT

(11) **EP 0 421 056 B1**
(45) Veröffentlichungstag und Bekanntmachung des Hinweises auf die Patenterteilung: **20.10.1993**
(21) Anmeldenummer: 90110641.9
(22) Anmeldetag: 05.06.1990
(51) Int. Cl.: F16B 21/08

(54) **Halteelement aus Kunststoff**
Plastic fastening element
Dispositif de fixation en matière plastique

(30) Priorität: 05.10.1989 DE 8911881 U
(43) Veröffentlichungstag der Anmeldung: 10.04.1991
(73) Patentinhaber: TRW United-Carr GmbH & Co. KG, D-67677 Enkenbach-Alsenborn (DE)
(72) Erfinder: Kraus, Willibald, D-6718 Grünstadt (DE)
(74) Vertreter: Schieschke, Klaus, Dipl.-Ing.

(56) Entgegenhaltungen:
- DE-A- 3 907 362
- DE-U- 8 812 284
- GB-A- 2 020 733

## Beschreibung

Die Erfindung bezieht sich auch ein Halteelement aus Kunststoff zur Befestigung innerhalb einer Trägeröffnung, mit einem eine axiale Richtung definierenden Grundkörper und zwei daran angeordneten, einander gegenüberliegenden, sich durch die Trägeröffnung erstreckenden, im spitzen Winkel zueinanderstehenden Federfingern, welche im montierten Zustand die Trägeröffnung hintergreifen, wobei der Grundkörper und die Federfinger jeweils einen etwa dreieckförmigen Zwischenraum begrenzen.

Als Stand der Technik sind bereits derartige Halteelemente bekannt, wobei an den Grundkörper sich zwei einander gegenüberliegende Federfinger anschließen und oberhalb einer Dichtlippe ein weiteres Element vorhanden ist. (US-PS 3 909 883, US-PS 3678 797). Nachteilig bei diesen bekannten Konstruktionen ist, daß durch die starke Materialanhäufung im Bereich der Federfinger eine genaue Maßhaltigkeit dieser Federfinger nicht möglich ist. Weiterhin ergibt die starke Materialanhäufung eine unerwünschte Schwindung des Materials, so daß letztendlich bei der Herstellung ein langsames Spritzen, und im Endprodukt eine ständige Überprüfung der Qualität erforderlich sind.

Zum Stand der Technik zählen weiterhin Halteelemente mit im rechten Winkel zueinanderstehenden Rechtecken statt der Federfinger (US-PS 3 412 437, FR-PS 2 426 179) sowie die Anordnung eines Schlitzes zwischen den Federfingern (US-PS 3 213 500). Auch diese bekannten Konstruktionen erfüllen jedoch nicht das Erfordernis der Maßgenauigkeit infolge der speziellen Gestaltung.

Darüber hinaus ist ein Befestigungsclip bekannt (DE 39 07 362 A1), welcher zwei Paare sich bezüglich der Clipsachse im wesentlichen gegenüberstehender elastischer Schenkel aufweist. Die Außenflächen dieser Schenkel besitzen als Rasten dienende Vertiefungen. Damit haben diese Vertiefungen nicht die Funktion der Vermeidung einer starken Materialanhäufung, sondern dienen zu Halterungszwecken.

Demgegenüber liegt der vorliegenden Erfindung die Aufgabe zugrunde, ein Halteelement der eingangs genannten Art so auszubilden, daß auf einfache Weise eine starke Materialanhäufung bei der Herstellung vermieden, und eine gleichbleibend gute Qualität des Endproduktes gewährleistet wird.

Diese Aufgabe wird erfindungsgemäß dadurch gelöst, daß die Federfinger an ihrem Außenumfang mit Freiarbeitungen in Umfangsrichtung versehen sind und daß jeder Federfinger einen sich axial erstreckenden Mittelsteg aufweist, an welchen sich beidseitig die Freiarbeitungen anschließen. Durch diese Freiarbeitungen ergeben sich die Vorteile schnellerer Spritzzeiten, eine Vermeidung von Deformation durch Nachschwindung, eine genaue Maßhaltigkeit, eine Vermeidung von Lunkerstellen, Materialeinsparung sowie eine bessere bzw. leichtere Montage in einer Trägeröffnung.

In weiterer Ausgestaltung der Erfindung kann der Mittelsteg im oberen Bereich durch einen Quersteg begrenzt sein.

Darüber hinaus weisen die Federfinger im Bereich des dreieckförmigen Zwischenraums eine zu einer Dreieckseite parallele Fläche auf, wobei die beiden Flächen der Federfinger jeweils im gleichen Winkel zu dem Grundkörper stehen. Diese Flächen sind im oberen Bereich durch den Quersteg und im unteren Bereich jeweils durch eine durch den Mittelsteg geteilte Abstufung begrenzt. Im vorderen Bereich können die Federfinger keilförmig zulaufen mit vier im Querschnitt im rechten Winkel zueinanderstehenden, durch die Mittelstege und die Freiarbeitung gebildeten Rechtecken.

In weiterer Ausgestaltung der Erfindung kann an den im Querschnitt rechteckig ausgebildeten Grundkörper eine den Federfingern gegenüberliegende, umlaufende elastische Dichtlippe anschließen, an welcher unterseitig parallel zu den Mittelstegen ein sich bis zu dem Grundkörper erstreckender Steg angeordnet ist. Dieser Steg kann breiter als die beiden Mittelstege der Federfinger sein.

Die Erfindung wird nachfolgend anhand eines in der Zeichnung dargestellten Ausführungsbeispiels näher beschrieben. In der Zeichnung zeigen:
- Fig. 1: eine Seitenansicht eines Halteelements, teils geschnitten
- Fig. 2: eine Vorderansicht des Halteelements nach Fig. 1
- Fig. 3: einen Schnitt gemäß der Linie III - III in Fig. 1
- Fig. 4: einen Schnitt gemäß der Linie IV . IV in Fig. 2.

Das erfindungsgemäße, aus Kunststoff bestehende Halteelement 1 weist im wesentlichen einen Grundkörper 2, eine im oberen Bereich daran anschließende umlaufende Dichtlippe 14 sowie an den Grundkörper im unteren Bereich anschließende Federfinger 3 und 4 auf. Diese Federfinger 3 und 4 sowie der Grundkörper 2 begrenzen im Innenbereich jeweils einen in etwa dreieckförmigen Zwischenraum 5 und 6, so daß die Federfinger entsprechend ihre Elastizität erhalten.

Diese Federfinger 3 und 4 sind an ihrem außenumfang mit Freiarbeitungen 7, 7` bzw. 8, 8` versehen. Hierbei weist jeder Federfinger 3, 4 eine Mittelsteg 9 auf, an welchem beidseitig diese Freiarbeitungen 7, 7` bzw. 8, 8` anschließen. Im oberen Bereich geht der Mittelsteg 9 jeweils in einen Quersteg 10 über, welcher hinter eine Trägeröffnung einrasten kann.

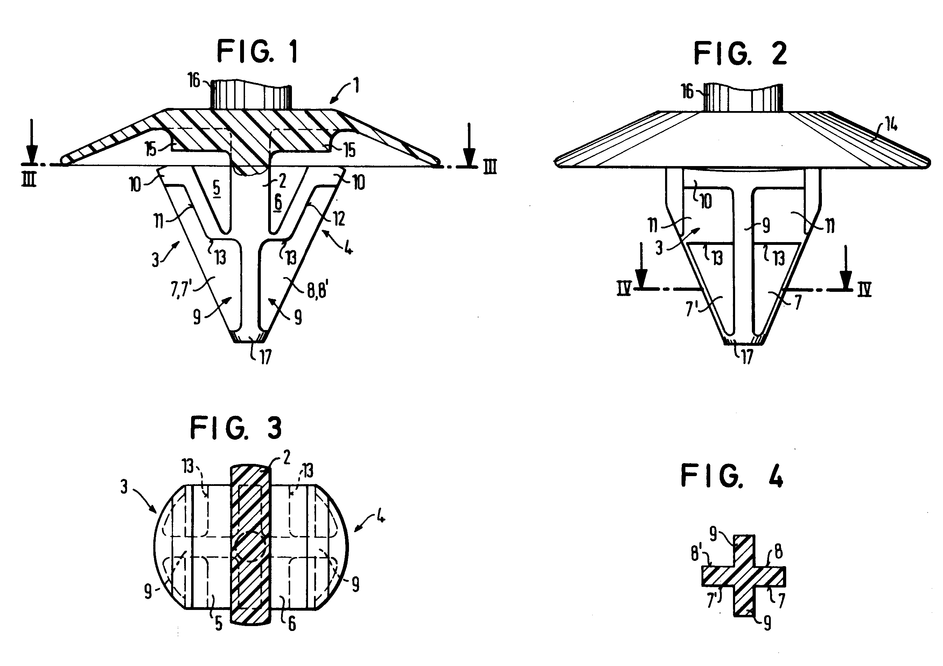

Diese Federfinger 3, 4 weisen im Bereich des dreieckförmigen Zwischenraums 5, 6 jeweils eine zu einer Dreieckseite parallele Fläche 11 bzw. 12 auf, wobei diese beiden Flächen 11 bzw. 12 der Federfinger 3, 4 jeweils im gleichen Winkel zu dem Grundkörper 2 stehen. Die Flächen 11, 12 sind im oberen Bereich durch den Quersteg 10 und im unteren Bereich jeweils durch eine durch den Mittelsteg 9 geteilte Abstufung 13 nach Fig. 1, 2 und 3 begrenzt.

Aus den Fig. 1, 2 und 4 ist ersichtlich, daß die Federfinger 3, 4 vorderseitig keilförmig zulaufen mit vier im Querschnitt im rechten Winkel zueinanderstehenden, durch die Mittelstege 9 und die Freiarbeitungen 7, 7` bzw. 8, 8` gebildeten Rechtecken. Im unteren Bereich laufen diese Rechtecke in einen Ansatz 17 aus.

Die an dem Grundkörper 2 angeordnete, den Federfingern 3, 4 gegenüberliegende, umlaufende elastische Dichtlippe 14 weist unterseitig gemäß Fig. 1 parallel zu den Mittelstegen 9 einen sich bis zu dem Grundkörper 2 erstreckenden Steg 15 auf. Dieser Steg 15 hat die Funktion einer Führung innerhalb einer nicht näher dargestellten Trägeröffnung. Oberhalb der umlaufenden Dichtlippe 14 kann das neuerungsgemäße Halteelement mit einem Anschlußelement 16 versehen sein, beispielsweise einer Rohrhalterung, einem Anschlußzapfen oder einem anderen Element zur Halterung eines Gegenstandes (nicht näher dargestellt).

Durch die besondere Gestaltung der Federfinger 3 und 4 mit ihren Freiarbeitungen 7, 7` bzw. 8 und 8` wird eine unerwünschte Materialanhäufung vermieden, so daß neben einer Materialeinsparung schnellere Spritzzeiten und eine größere Maßhaltigkeit und damit Qualität des Endproduktes gegeben ist. Es werden Lunkerstellen vermieden, wobei die im vorderen Bereich kreuzartig ausgebildeten Teile der Federfinger sowie der Freiarbeitungen eine schnelle und leichte Montage in einer nicht näher dargestellten Trägeröffnung gewährleisten.

## Patentansprüche

1. Halteelement (1) aus Kunststoff zur Befestigung innerhalb einer Trägeröffnung, mit einem eine axiale Richtung definierenden Grundkörper (2) und zwei daran angeordneten, einander gegenüberliegenden, sich durch die Trägeröffnung erstreckenden, im spitzen Winkel zueinander stehenden Federfingern(3, 4), welche im montierten Zustand die Trägeröffnungen hintergreifen, wobei der Grundkörper (2) und die Federfinger (3, 4) jeweils einen etwa dreieckförmigen Zwischenraum (5, 6) begrenzen,
dadurch gekennzeichnet,
daß die Federfinger (3, 4) an ihrem Außenumfang mit Freiarbeitungen (7, 7'; 8, 8') in Umfangsrichtung versehen sind und
daß jeder Federfinger (3, 4) einen sich axial erstreckenden Mittelsteg (9) aufweist, an welchen sich beidseitig die Freiarbeitungen anschließen.

2. Halteelement nach Anspruch 1, dadurch gekennzeichnet, daß der Mittelsteg (9) im oberen Bereich durch einen Quersteg (10) begrenzt ist.

3. Halteelement nach Anspruch 1 und 2, dadurch gekennzeichnet, daß die Federfinger (3,4) im Bereich des dreieckförmigen Zwischenraumes (5,6) eine zu einer Dreieckseite parallele Fläche (11,12), aufweisen, wobei die beiden Flächen (11,12) der Federfinger (3,4) im gleichen Winkel zu dem Grundkörper (2) stehen.

4. Halteelement nach Anspruch 2 und 3, dadurch gekennzeichnet, daß die Flächen (11,12) im oberen Bereich durch den Quersteg (10) und im unteren Bereich jeweils durch eine durch den Mittelsteg (9) geteilte Abstufung (13) begrenzt sind.

5. Halteelement nach einem der vorhergehenden Ansprüche, dadurch gekennzeichnet, daß die Federfinger (3,4) vorderseitig keilförmig zulaufen mit vier im Querschnitt im rechten Winkel zueinanderstehenden, durch die Nittelstege (9) und die Freiarbeitungen (7,7`; 8,8`) gebildeten Rechtecken.

6. Halteelement nach einem der vorhergehenden Ansprüche, dadurch gekennzeichnet, daß an den im Querschnitt rechteckig ausgebildeten Grundkörper (2) eine den Federfingern (3,4) gegenüberliegende, umlaufende, elastische Dichtlippe (14) anschließt, an welcher unterseitig parallel zu den Nittelstegen (9) ein sich bis zu dem Grundkörper (2) erstreckender Steg (15) angeordnet ist.

## Claims

1. Fastening element (1) of plastic for fastening within a support opening, having a basic body (2) defining an axial direction and two resilient fingers (3, 4) which are arranged thereon, lie opposite one another, extend through the support opening, are at an acute angle to one another and, in the installed state, engage behind the support openings, the basic body (2) and the resilient fingers (3, 4) in each case delimiting an approximately triangular interspace (5, 6), characterised in that the resilient fingers (3, 4) are provided at their outer circumference with recesses (7, 7'; 8, 8') in the circumferential direction and in that each resilient finger (3, 4) has an axially extending centre web (9) which is contiguous with the recesses at both sides.

2. Fastening element according to Claim 1, characterised in that the centre web (9) is delimited in the upper region by a transverse web (10).

3. Fastening element according to Claims 1 and 2, characterised in that the resilient fingers (3, 4) have in the region of the triangular interspace (5, 6) a face (11, 12) which is parallel to a side of the triangle, both faces (11, 12) of the resilient fingers (3, 4) being at the same angle to the basic body (2).

4. Fastening element according to Claims 2 and 3, characterised in that the faces (11, 12) are delimited in the upper region by the transverse web (10) and in the lower region in each case by a step (13) which is divided by the centre web (9).

5. Fastening element according to one of the preceding claims, characterised in that the resilient fingers (3, 4) taper in a wedge-like manner at the front side with four rectangles which, in cross-section, are at a right angle to one another and are formed by the centre webs (9) and the recesses (7, 7'; 8, 8').

6. Fastening element according to one of the preceding claims, characterised in that a surrounding, elastic sealing lip (14) which lies opposite the resilient fingers (3, 4) is contiguous with the cross-sectionally rectangularly designed basic body (2), a web (15) extending as far as the basic body (2) being arranged, parallel to the centre webs (9), on the underside of said sealing lip (14).

## Revendications

1. Dispositif de fixation (1) en matière plastique pour la fixation à l'intérieur d'une ouverture porteuse avec un corps de base définissant une direction axiale (2) et deux doigts à ressort (3, 4) formant un angle aigu entre eux et s'étendant en opposition l'un de l'autre à travers l'ouverture porteuse, doigts à ressort qui à l'état monté pénètrent dans les ouvertures porteuses, le corps de base (2) et les doigts à ressort (3, 4) délimitant respectivement un espace intermédiaire (5, 6) sensiblement triangulaire,
caractérisé en ce que les doigts à ressort (3, 4) sont munis sur leur périphérie extérieure des parties ajourées (7, 7' ; 8, 8') dans la direction périphérique, et
en ce que chaque doigt à ressort (3, 4) comporte une entretoise médiane (9) s'étendant axialement sur laquelle se raccordent de chaque côté les parties ajourées.

2. Elément de fixation selon la revendication 1, caractérisé en ce que l'entretoise médiane (9) est délimitée dans la zone supérieure par une entretoise transversale (10).

3. Dispositif de fixation selon les revendications 1 et 2, caractérisé en ce que les doigts à ressort (3, 4) présentent dans la zone de l'espace intermédiaire triangulaire (5, 6) une surface parallèle à un côté du triangle (11, 12), les deux surfaces (11, 12) des doigts à ressort étant dans le même angle par rapport au corps de base (2).

4. Dispositif de fixation selon les revendications 2 et 3, caractérisé en ce que les surfaces (11, 12) sont délimitées dans la zone supérieure par l'entretoise transversale (10) et dans la zone supérieure respectivement par un gradin (13) divisé par l'entretoise médiane (9).

5. Dispositif de fixation selon l'une des revendications précédentes, caractérisé en ce que les doigts à ressort (3, 4) s'étendent sur l'avant en forme de coin avec quatre rectangles formés en section transversale à angle droit juxtaposés entre eux par les entretoises médianes (9) et les parties ajourées (7, 7' ; 8, 8').

6. Dispositif de fixation selon l'une des revendications précédentes, caractérisé en ce que sur le corps de base (2) formé rectangulairement en section transversale est raccordée une lèvre d'étanchéité élastique (14) circulaire, en opposition aux doigts à ressort (3, 4), lèvre d'étanchéité sur laquelle est agencée sur le dessous, parallèlement aux entretoises médianes (9), une entretoise (15) s'étendant jusqu'au corps de base (2).
